# FASCICULE DE BREVET EUROPEEN

(11) **EP 1 327 168 B1**
(45) Date de publication et mention de la délivrance du brevet: **29.08.2007**
(21) Numéro de dépôt: 01978513.8
(22) Date de dépôt: 09.10.2001
(51) Int. Cl.: G02B 5/18

(54) **PIECE DE MATIERE TRANSPARENTE ET LENTILLE DE PHARES DE VEHICULES**
BAUTEIL AUS TRANSPARENTEM MATERIAL UND LINSE FÜR KRAFTFAHRZEUGSCHEINWERFER
PART MADE OF TRANSPARENT MATERIAL AND HEADLIGHT LENS FOR VEHICLES

(30) Priorité: 12.10.2000 FR 0013083
(43) Date de publication de la demande: 16.07.2003
(73) Titulaire: HOLOPHANE SA, 27700 Les Andelys (FR)
(72) Inventeur: LAMY, Patrick, F-27380 Fleury sur Andelle (FR); MUZARD, Patrick, F-27700 Les Andelys (FR); LECLERCQ, François-Régis, F-76420 Bihorel (FR)
(74) Mandataire: CAPRI
(86) Numéro de dépôt international: PCT/FR2001/003103
(87) Numéro de publication internationale: WO 2002/031543

(56) Documents cités:
- EP-A- 0 584 547
- EP-A- 0 738 904
- FR-A- 2 770 617
- US-A- 6 122 080

## Description

La présente invention concerne une lentille de phare de véhicule, laissant traverser des ondes du domaine du visible et présentant des caractéristiques optiques déterminées. Les lentilles de phares de véhicules sont normalement destinées à être montées devant une source lumineuse à l'intérieur d'un boîtier de phare.

Pour modifier ou pour conférer des caractéristiques optiques, notamment de diffraction, d'une lentille de phare de véhicule, il est connu de modifier l'état de surface de celles-ci afin de leur conférer un profil ou motif extérieur favorisant la diffraction de la lumière passant à travers la pièce ou la lentille. Ce type de traitement de surface est également utilisé pour des fins purement esthétiques sur des pièces à usage purement décoratif. En d'autres termes, il est connu de traiter la surface externe de lentilles de phare de véhicule dans un but fonctionnel et/ou décoratif.

Pour réaliser cet état de surface particulier, il existe plusieurs techniques. Une première technique consiste à réaliser cet état de surface par moulage, notamment lors du moulage de la lentille. Pour ce faire, les éléments de moule utilisés pour le moulage des lentilles doivent définir des empreintes particulières aptes à réaliser l'état de surface recherché. Cependant, ce type de technique par moulage présente des inconvénients techniques, notamment un manque de constance ou de qualité du fait du vieillissement, de l'usure ou encore de l'encrassement des éléments de moule. On a en effet remarqué que l'état de surface recherché variait dans le temps ou après chaque nettoyage d'éléments de moule. Il est donc pratiquement impossible avec cette technique de moulage d'assurer une qualité de surface constante pour les lentilles de phare de véhicule.

Une seconde technique utilisée pour réaliser ces états de surface consiste à usiner la lentille après son moulage. Là encore, il est difficile d'assurer une qualité d'état de surface constante. Cela provient du fait que des abrasifs sont utilisés pour réaliser cet usinage, et que la qualité des états de surface dépend directement de la granulométrie des abrasifs qui varie non seulement avec le temps mais encore d'un lot à l'autre d'abrasifs. On a en effet remarqué qu'un très faible écart dans la granulométrie des abrasifs engendre une grande différence sur les états de surface recherchés.

En outre, tous les traitements d'états de surfaces engendrent obligatoirement des irrégularités ou des discontinuités dans la surface de la lentille qui favorisent l'accumulation de saleté qui nuit énormément aux qualités optiques ou décoratives de la lentille.

La présente invention a pour but de remédier aux inconvénients précités de l'art antérieur en définissant une lentille de phares de véhicules, offrant des qualités optiques, notamment de diffraction, qui sont constantes dans le temps d'une pièce ou d'une lentille à l'autre. Elle doit en outre pouvoir être produite facilement à un faible coût.

Pour ce faire, la présente invention propose tout d'abord une lentille de phares de véhicules comprenant les caractéristes mises dans la revendication 1, ainsi qu'un procédé tel que défini dans la revendication 7.

Les revendications dépendantes défissent des modes de réalisation additionnels.

L'invention trouve en effet une application dans le cas d'une lentille de phare de véhicule pour laquelle les propriétés optiques et photométriques sont prépondérantes. Il est en effet courant d'utiliser des lentilles dans les phares de véhicules. La lentille est utilisée en association avec une source lumineuse et un cache interposé entre la source lumineuse et la lentille. Le cache a pour but de réaliser une coupure dans le faisceau lumineux émis. Cependant, la coupure réalisée par ce cache dans le faisceau lumineux est relativement nette, et au-dessus de cette coupure le faisceau lumineux présente une intensité très faible voire pratiquement nulle.

Le fait que le faisceau lumineux présente une intensité très faible au-dessus de la coupure peut être très gênant pour un conducteur qui cherche à visualiser des indications en hauteur, par exemple sur des panneaux d'autoroute.

En outre, du point de vue réglementaire, il est imposé qu'il y ait un éclairement minimum dans une zone dite des points de portiques, c'est à dire au-dessus de la coupure du faisceau d'éclairage émis.

Il faut donc à la fois éclairer légèrement la zone située au-dessus de la coupure en diminuant le contraste au niveau de la coupure en étalant le gradient de contraste, afin de ne pas gêner le conducteur et les autres usagers.

Il existe déjà dans l'art antérieur des lentilles de phares de véhicules qui cherchent à atteindre ce but. Pour ce faire, des traitements de surface sont réalisés par des techniques de moulage ou d'usinage telles que celles décrites précédemment en référence à l'art antérieur. On peut par exemple citer le document FR 2 770 617 qui décrit une lentille dont la face avant convexe comprend une série de surfaces de profil courbe aptes à dévier une partie du faisceau lumineux. Les surfaces de profil courbe sont formées par moulage avec la lentille elle-même, et souffrent par conséquent des inconvénients précités, à savoir le vieillissement, l'usure et l'encrassement des éléments de moule utilisés pour former la lentille.

Tous ces problèmes sont résolus avec la présente invention étant donné que les moyens de diffraction n'affectent pas la surface extérieur de la lentille, et sont réalisés d'autre part par un procédé permettant d'assurer une qualité constante des moyens de diffraction. Le principe même de l'invention réside dans le fait que les moyens de diffraction ne sont pas formés à l'extérieur de la lentille.

Selon une forme de réalisation permettant d'atteindre les critères photométriques précités, les moyens de diffraction s'étendent dans le corps massif de la lentille de phares de véhicules, selon un motif favorisant la diffraction de la lumière vers une zone située au-dessus d'un plan passant par le plan média de la lentille lorsqu'elle est en place dans le boîtier de phare, à savoir dans la zone située au-dessus de la coupure.

Additionnellement ou en variante, les moyens de diffraction s'étendent dans la lentille de phares de véhicules selon un motif formant un guide d'onde pour une lumière incidente. La lentille, en plus de son éclairage par la source lumineuse dans le but d'éclairer la chaussée, peut être illuminée par une source additionnelle émettant une lumière incidente qui se propage dans le guide d'onde formé par le motif des moyens de diffraction. Cette source de lumière additionnelle peut par exemple être allumée alors que la source lumineuse principale est éteinte pour conférer à la lentille et plus généralement aux phares de véhicules un effet esthétique attractif.

De préférence, la lentille est une lentille du type elliptique comprenant une face arrière plane et une face avant convexe. La source lumineuse est alors placée perpendiculairement à la face arrière et la lumière incidente est émise parallèlement au plan de la face arrière.

Le document "Optical applications of laser-induced gratings in Eu doped glasses", Applied Optics, E. G. Behavens et al, 10 April 1990, No. 11, NY, US divulgue une pièce de matière transparente comprenant des moyens de diffraction internes.>

L'invention sera maintenant plus amplement décrite en référence aux dessins joints donnant à titre d'exemple non limitatif un mode de réalisation de l'invention.

Sur les figures :

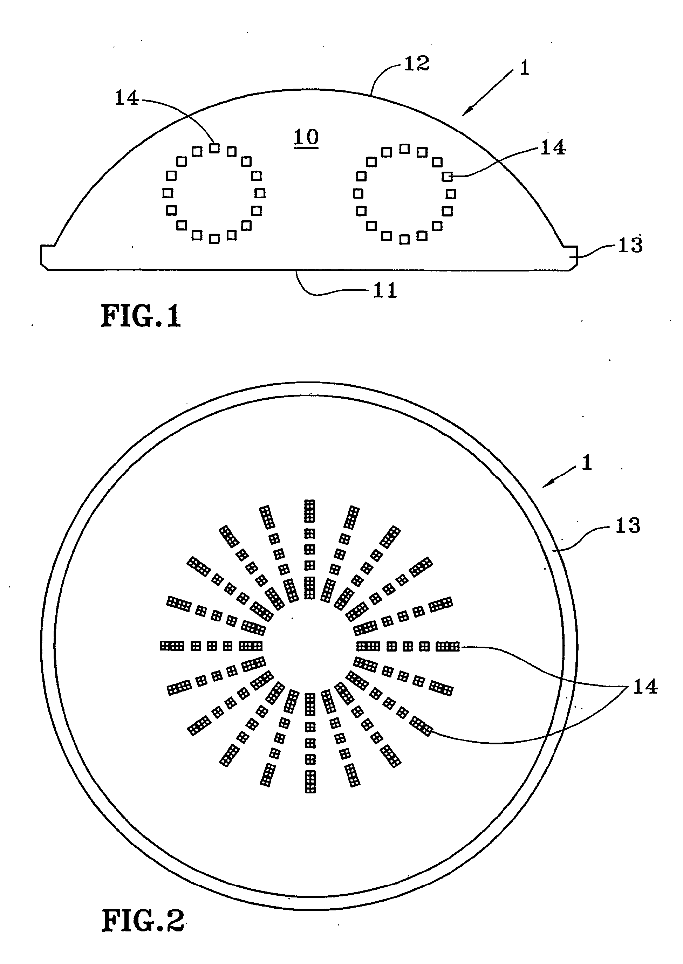

- la figure 1 est une vue en coupe transversale verticale à travers une lentille de phare de véhicule selon l'invention, et
- la figure 2 est une vue de dessus de la lentille de la figure 1.

La lentille de phares de véhicules représentée sur les dessins est une lentille du type elliptique présentant une face arrière plane circulaire 11 et une face avant convexe 12 se raccordant sur la face arrière 11 par un rebord 13 qui sert à la fixation de la lentille dans un boîtier de phare de véhicule. Les faces 11 et 12 délimitent un corps massif 10 qui est totalement plein.

Le corps massif de la lentille est monobloc, et non constitué de strates ou d'agglomérations.

La lentille peut être réalisée dans n'importe quelle matière transparente pouvant supporter la chaleur émise par la source lumineuse du phare du véhicule. La lentille peut notamment être réalisée en verre ou en matière plastique telle que du polycarbonate ou du méthacrylate.

Si la lentille est en verre, elle peut être formée à partir d'une seule goutte de verre en fusion. Le corps massif résultant est ainsi parfaitement homogène.

Selon l'invention, des moyens de diffraction de la lumière visible sont formés à l'intérieur de la lentille c'est à dire dans le corps massif 10. Les moyens de diffraction 14 ne viennent pas en contact des surfaces externes 11 et 12 de la lentille 1. On ne peut cependant exclure le fait qu'une partie des moyens de diffraction soient situés au niveau des faces externes 11 et 12. Cependant, une partie des moyens de diffraction sont situés en éloignement de ces faces 11 et 12. Il est même préférable que la totalité des moyens de diffraction soient situés en éloignement des faces 11 et 12.

Les moyens de diffraction se présentent avantageusement sous la forme de micro-détériorations ponctuelles du corps massif 10 de la lentille. Ces micro-détériorations ponctuelles 14 peuvent être réalisées au moyen d'un procédé de formation utilisant un rayonnement laser, au cours duquel la lentille est soumise à un rayonnement laser ponctuel que l'on déplace et que l'on varie en intensité pour former un motif de micro-détériorations ponctuel.

Les micro-détériorations se présenteront sous diverses formes en fonction du matériau constitutif de la lentille. Par exemple, lorsque la lentille est réalisée en verre, ces micro-détériorations se présentent sous la forme de micro-éclats obtenus par l'apport massif d'énergie du rayonnement laser. En revanche, lorsque la lentille est réalisée en matière plastique, ces micro-détériorations ponctuelles se présentent sous la forme de micro-fusions.

Les moyens de diffraction peuvent s'étendre dans le corps massif selon un motif permettant d'obtenir un résultat fonctionnel et/ou esthétique. En effet, le motif réalisé par les moyens de diffraction peut par exemple favoriser la diffraction de la lumière émise par la source lumineuse du phare de véhicule de manière à éclairer même faiblement une partie autrement sombre, comme par exemple la zone située au-dessus de la coupure formée par le cache dans un phare de véhicule conventionnel expliqué précédemment en relation avec l'art antérieur. Le motif des moyens de diffraction peut par exemple apporter de la lumière dans la zone au-dessus de la coupure et ainsi atténuer le contraste au niveau de la coupure.

D'autre part, les moyens de diffraction peuvent également d'étendrent dans le corps massif de la lentille selon un motif formant un guide d'onde. En illuminant alors la lentille de manière adéquate, il est possible de faire circuler la lumière dans le guide d'onde de manière à rendre encore plus visible le motif formé par les moyens de diffraction. Le résultat est alors purement esthétique, et se voit directement et uniquement lorsque l'on regarde la lentille elle-même.

On peut par exemple imaginer un phare de véhicule dont le boîtier comporte une source de lumière principale destinée à traverser la lentille pour éclairer la chaussée et une source de lumière secondaire, par exemple une LED, uniquement utilisée pour éclairer la lentille dans un but esthétique en se servant du motif de diffraction comme guide d'onde. La source principale est située de manière classique derrière la face plane 11 de la lentille alors que la source de lumière secondaire peut être installée dans le plan ou parallèlement au plan formé par la face plane 11.

## Revendications

1. Lentille de phares de véhicules (1) destinée à être montée devant une source lumineuse dans un boîtier de phare, ladite lentille (1) comprenant des faces externes (11, 12) délimitant un corps massif monobloc (10) de matière transparente, **caractérisée en ce qu'**elle comprend des moyens de diffraction de lumière (14) situés à l'intérieur du corps massif monobloc (10) en éloignement des faces externes (11, 12).

2. Lentille selon la revendication 1, dans laquelle la matière transparente est choisie parmi le verre et les matières plastiques tels que le polycarbonate ou le méthacrylate.

3. Lentille selon la revendication 1 ou 2, dans laquelle les moyens de diffraction s ont constitués par d es micro-détériorations ponctuelles (14) du corps massif (10).

4. Lentille selon l'une quelconque des revendications précédentes, dans laquelle les moyens de diffraction (14) s'étendent dans le corps massif (10) selon un motif favorisant la diffraction de la lumière vers une zone située au-dessus d'un plan passant par le plan médian de la lentille lorsqu'elle est en place dans le boîtier de phare.

5. Lentille selon l'une quelconque des revendications précédentes, dans laquelle les moyens de diffraction (14) s'étendent dans le corps massif (10) selon un motif formant un guide d'onde pour une lumière incidente.

6. Lentille selon les revendications 4 et 5, dans laquelle la lentille est une lentille du type elliptique comprenant une face arrière plane (11) et une face avant convexe (12), la source lumineuse étant placée perpendiculairement à la face arrière (11) et la lumière incidente étant émise parallèlement au plan de la face arrière (11).

7. Procédé de formation de moyens de diffraction à l'intérieur d'une lentille de phares de véhicules, en éloignement des faces externes (11,12) de la dite lentille, utilisant un rayonnement laser.

8. Procédé selon la revendication 7, dans lequel les moyens de diffraction sont des micro-détériorations ponctuelles, par exemple sous la forme d'éclats, réalisés dans la masse d'une lentille en verre.

## Claims

1. A vehicle-headlight lens (1) designed to be mounted in front of a light source in a headlight housing, said lens (1) comprising outer faces (11, 12) defining an integral solid body (10) made of transparent material, the lens being **characterized in that** it further comprises light diffracting means (14) situated inside the integral solid body (10) at a distance from the outer faces (11, 12).

2. A lens according to claim 1, in which the transparent material is selected from glass and plastics materials such as polycarbonate or methacrylate.

3. A lens according to claim 1 or claim 2, in which the diffracting means are constituted by point micro-deteriorations (14) of the solid body (10).

4. A lens according to any preceding claim, in which the diffracting means (14) extend in the solid body (10) in a pattern favoring the diffraction of light towards a zone situated above a plane passing through the mid plane of the lens when it is in place in the headlight housing.

5. A lens according to any preceding claim, in which the diffracting means (14) extend in the solid body (10) in a pattern forming a waveguide for an incident light.

6. A lens according to claims 4 and 5, in which the lens is an elliptic-type lens comprising a plane rear face (11) and a convex front face (12), the light source being placed perpendicularly to the rear face (11) and the incident light being emitted parallel to the plane of the rear face (11).

7. A method of forming diffracting means inside a vehicle-headlight lens away from the outer faces (11, 12) of said lens using laser radiation.

8. A method according to claim 7, in which the diffracting means are point micro-deteriorations, e.g. in the form of splinters, made in the bulk of a glass lens.

## Patentansprüche

1. Kraftfahrzeugscheinwerferlinse (1) zur Anbringung vor einer Lichtquelle in einem Scheinwerfergehäuse, wobei die Linse (1) zwei Außenseiten (11, 12) aufweist, die einen massiven einstückigen Körper (10) aus transparentem Material begrenzen, **dadurch gekennzeichnet, dass** sie Lichtdiffraktionsmittel (14) aufweist, die im Innern des einstückigen massiven Körpers (10) unter Entfernung von den Außenseiten (11, 12) angeordnet sind.

2. Linse nach Anspruch 1, wobei das transparente Material aus Glas und Kunststoffmaterialien, wie etwa Polykarbonat oder Methacrylat ausgewählt ist.

3. Linse nach Anspruch 1 oder 2, wobei die Diffraktionsmittel durch punktuelle Mikrodefekte (14) des massiven Körpers (10) gebildet sind.

4. Linse nach einem der vorangehenden Ansprüche, wobei sich die Diffraktionsmittel (14) in dem massiven Körper (10) in Übereinstimmung mit einem Diffraktion des Lichts begünstigenden Motiv zu einer Zone erstrecken, die über einer Ebene zu liegen kommt, welche die Medianebene der Linse quert, wenn sich diese in dem Scheinwerfergehäuse in Position befindet.

5. Linse nach einem der vorangehenden Ansprüche, wobei sich die Diffraktionsmittel (14) in dem massiven Körper (10) in Übereinstimmung mit einem Motiv erstrecken, das einen Wellenleiter für einfallendes Licht bildet.

6. Linse nach Anspruch 4 und 5, wobei die Linse eine elliptische Linse ist, die eine ebene Rückseite (11) und eine konvexe Vorderseite (12) aufweist, wobei die Lichtquelle senkrecht zu der Rückseite (11) angeordnet ist, und wobei das einfallende Licht parallel zu der Ebene der Rückseite (11) ausgestrahlt wird.

7. Verfahren zum Ausbilden von Diffraktionsmitteln im Innern einer Kraftfahrzeugscheinwerferlinse unter Entfernung von den Außenseiten (11, 12) der Linse unter Verwendung einer Laserstrahlung.

8. Verfahren nach Anspruch 7, wobei die Diffraktionsmittel punktuelle Mikrodefekte sind, beispielsweise in Form von Splittern, die in der Masse einer Glaslinse gebildet sind.
